# EUROPEAN PATENT APPLICATION

(11) **EP 2 587 291 A1**
(43) Date of publication of application: **01.05.2013**
(21) Application number: 11290499.0
(22) Date of filing: 28.10.2011
(51) Int. Cl.: G02B 6/44, H01B 11/22

(54) **Cable and method of manufacturing a cable**

(71) Applicant: Alcatel Lucent, 75007 Paris (FR)
(72) Inventor: Zorad, Robert, 31275 Lehrte (DE); Mahlandt, Erhard, 30880 Laatzen (DE); Baumann, Sven-Oliver, 30629 Hannover (DE); Bernasch, Peter, 30851 Langenhagen (DE)
(74) Representative: Dreiss, Uwe

(57) **Abstract**

The invention relates to a cable (100) comprising a radially outer section (110), a radially inner section (130), and an intermediate layer (120) arranged between said radially outer section (110) and said radially inner section (130), wherein said intermediate layer (120) comprises at least one structural weakening (124) along at least one longitudinal section (122_1) of said intermediate layer (120).

## Description

### Field of the invention

The invention relates to a cable comprising a radially outer section, a radially inner section, and an intermediate layer arranged between said radially outer section and said radially inner section.

The invention further relates to a method of manufacturing a cable of the aforementioned type.

### Background

To facilitate stripping without damaging especially a radially inner section of said conventional cable, it is proposed to provide an adhesion reducing material characteristic of the intermediate layer. For example, a brittle material is proposed for the intermediate layer. This has the effect that, if one or more elements of the outer section of the cable are stripped from the intermediate layer, the brittle material breaks apart in several pieces. Although thereby reducing an adhesion between an inner surface of the outer section and an outer surface of the intermediate layer, crumbled pieces of the brittle material are present at the stripping position and may even adhere to the radially inner section of the cable thus disadvantageously requiring further handling steps such as removing crumbled brittle material and cleaning components of the radially inner section for completing the stripping procedure.

Furthermore, applying the brittle material to the intermediate layer requires complex and costly manufacturing procedures.

Thus, it is an object of the present invention to provide an improved cable and an improved method of manufacturing a cable which avoid the disadvantages of the prior art.

### Summary

According to the present invention, this object is achieved in that said intermediate layer comprises at least one structural weakening along at least one longitudinal section of said intermediate layer. This advantageously enables to avoid brittle material and the disadvantages related to removing crumbled portions of the brittle material while stripping the cable. Advantageously, according to the embodiments, the material selection for implementing the intermediate layer is not limited to brittle material thus increasing the possible number of product variants for said cable.

By providing at least one structural weakening along at least one longitudinal section of said intermediate layer, a very efficient stripping of said cable, especially of its radially inner section, is possible.

For stripping the radially inner section of the cable according to the embodiments, it is sufficient to identify the structural weakening(s) provided in said intermediate layer and to tear apart the different portions of the intermediate layer material in the range of the structural weakening(s). This process may well be performed manually by a technician, which is very efficient since no extra tools are required. Moreover, the inventive structure of the cable does not require cutting tools to be employed for stripping the cable, whereby the risk of unintentionally damaging especially the radially inner section of the cable is significantly reduced.

Alternatively or additionally, a stripping tool may also be employed to strip a cable according to the embodiments. However, at least for stripping the radially inner section, the tool is not required to comprise sharp blades or the like thus again reducing the risk of damage to the cable while stripping.

A further advantage of the invention is the easy scalability of the manufacturing process to different types of cables or intermediate layer material. Depending on the thickness and/or stiffness of the intermediate layer material, a suitable number of structural weakening(s) can be provided which ensures easy and efficient strippability.

According to an advantageous embodiment, said structural weakening is a cut, which can efficiently be applied to the intermediate layer basically independently of the intermediate layer material. Especially when manufacturing virtually endless cables, conventional cutting tools comprising one or more blades may efficiently be used to apply the structural weakening(s) to the intermediate layer. Laser-cutting is also possible for effecting the structural weakening(s) according to the embodiments. Instead of cutting, the structural weakening(s) may also be effected by varying processing parameters such as material thickness during a process of providing the intermediate layer. Combinations of the aforementioned measures are also possible.

According to a further advantageous embodiment, said intermediate layer comprises filling material which at least partly fills a space between the radially outer section and the radially inner section, wherein said filling material is preferably foam. Foam-type filling material may on the one hand be provided to the cable very efficiently by well-known manufacturing processes. On the other hand, the step of cutting, e.g. with blade tools or by means of laser radiation, is also very efficient with foam materials.

According to a further advantageous embodiment, said at least one structural weakening comprises a radial thickness in a range between about 20 percent and about 100 percent of a radial thickness of said intermediate layer, preferably in a range between about 60 percent and about 95 percent of said radial thickness of said intermediate layer. I.e., the weakenings are not necessarily designed such that free access (i.e., without removing some intermediate layer material such as e.g., foam) through the weakenings to the radially inner section is possible. Rather, comparatively thin-walled (or even thicker) intermediate layer sections may remain radially outside the radially inner section in the area of the weakenings which increases protection of the radially inner section prior to stripping and which further enables to prevent relative movements of components of the radially inner section with respect to the intermediate layer by means of increased adhesion and friction forces.

According to a further advantageous embodiment, a plurality of structural weakenings is provided within said at least one longitudinal section, whereby stripping can be performed more easily as compared to a lower number of weakenings.

According to a further advantageous embodiment, a number of structural weakenings per unit length and/or an angular position of structural weakenings and/or a radial thickness of structural weakenings and/or a width of structural weakenings varies over different longitudinal sections of said intermediate layer. I.e., different longitudinal sections, which may be, but need not necessarily be, neighboring sections, of the cable or its intermediate layer, respectively, may each comprise one or more structural weakenings of different types.

Such longitudinal sections may e.g. comprise a length of some centimeters up to some meters or more. For example, a first longitudinal section may not comprise any weakenings at all and as such comprise a structure similar to a conventional cable. A second longitudinal section, which follows the first longitudinal section along a length coordinate of the cable, may e.g. comprise one or more weakenings according to the embodiments. Consequently, when stripping such cable, the second longitudinal section will be preferred for stripping since the weakenings facilitate the stripping process.

Varying an angular position of weakenings such as cuts between neighboring longitudinal sections is particularly advantageous since it maintains an optimal strippability over the complete cable length while at the same time avoiding a single cut extending all along the cable length, which - while facilitating the manufacturing process - affects stability of the cable and protection of the radially inner sections.

The aforementioned properties related to the structural weakenings may change from length section to length section, wherein the weakenings' properties basically remain constant within a specific length section.

Alternatively or additionally, the aforementioned properties related to the structural weakenings may change basically continuously along a length coordinate of the cable, whereby smooth transitions between cable sections with different stripping properties can be attained.

According to a further advantageous embodiment, said intermediate layer comprises at least two substantially radial cuts arranged substantially symmetrically around the radially inner section of said cable. More than two cuts are also possible, e.g. four, six, eight cuts. The maximum number of cuts is basically determined depending on the required stability of the intermediate layer and a desired friction force between the intermediate layer and a radially inner section of the cable. Generally, symmetric arrangement of the structural weakenings is preferred, but the invention is not limited thereto. Asymmetric or stochastic distribution of structural weakenings, e.g. cuts, is also possible.

According to a further advantageous embodiment, said radially outer section and/or said radially inner section comprises at least one electrical or optical conductor, wherein said at least one electrical conductor is preferably corrugated. The combination of electrical and optical conductors yield so-called hybrid electro-optical cables which are ideally suited for communications applications such as connecting remote radio heads for a base station of a cellular communications network to a remotely arrange baseband signal processing unit of the base station, wherein high data rate transmission can be effected via one or more optical fibers of the optical cable portion, and wherein other transmissions and an electrical energy supply, surge protection and the like are effected by the electrical cable portion. Advantageously, at least some electrical conductors of such an arrangement are arranged coaxially to each other.

Corrugation of cylindrical/coaxial conductors increases their mechanical flexibility.

According to a further advantageous embodiment, said radially outer section comprises a first electrical conductor, which is radially surrounded by an electrically insulating layer, wherein said electrically insulating layer is radially surrounded by a second electrical conductor, and wherein said second electrical conductor is radially surrounded by a protection layer.

According to a further advantageous embodiment, said radially inner section comprises at least one optical fiber cable or single optical fibers or a combination thereof. Further embodiments also comprise optical fibers or optical fiber cables in the radially outer section of the cable and electrical cables in the radially inner section of the cable.

In any case, the structural weakenings according to the embodiments facilitate stripping of the cable and help to protect any conductor comprised therein from damage due to excessive stripping forces.

A further solution to the object of the present invention is given by a method of manufacturing a cable which comprises a radially outer section, a radially inner section, and an intermediate layer arranged between said radially outer section and said radially inner section. The method comprises the following steps: providing said radially inner section, providing said intermediate layer on said radially inner section, and providing said radially outer section on said intermediate layer, wherein at least one structural weakening along at least one longitudinal section of said intermediate layer is provided.

According to a preferred embodiment, said step of providing said at least one structural weakening is performed after said step of providing said intermediate layer on said radially inner section. This allows efficient manufacturing of the inner sections of the cable together with the intermediate layer. Since the step of providing said at least one structural weakening is performed during manufacturing of the cable in a controlled processing environment - in contrast to a manual stripping process in the field-, the risk of damaging components of the cable during application of the weakenings (which may employ cutting, laser cutting, and the like) is very low.

However, according to a further advantageous embodiment, this risk may even be further reduced by said step of providing said at least one structural weakening being performed prior to said step of providing said intermediate layer on said radially inner section. This has the effect that no further manipulation of the intermediate layer in the sense of providing cuts or other structural weakenings is required once the (pre-weakened) intermediate layer has been applied to the radially inner section.

### Brief description of the figures

Further features, aspects and advantages of the present invention are given in the following detailed description with reference to the drawings in which:
- Figure 1: schematically depicts a side view of a cable according to a first embodiment,
- Figure 2a: schematically depicts a cross-sectional view of the cable of Figure 1,
- Figure 2b: schematically depicts an enlarged cross-sectional view of an intermediate layer of a cable according to a further embodiment,
- Figure 3, 4a, 4b: schematically depict a cross-sectional view of a cable according to further embodiments,
- Figure 5: schematically depicts a side view of an intermediate layer of a cable according to a further embodiment,
- Figure 6a, 6b: schematically depicts a cross-sectional view of a cable according to further embodiments
- Figure 7: schematically depicts a side view of a cable according to a further embodiment,
- Figure 8: schematically depicts a cross-sectional view of the cable of Figure 7, and
- Figure 9: depicts a simplified flow chart of a method according to an embodiment.

### Description of the embodiments

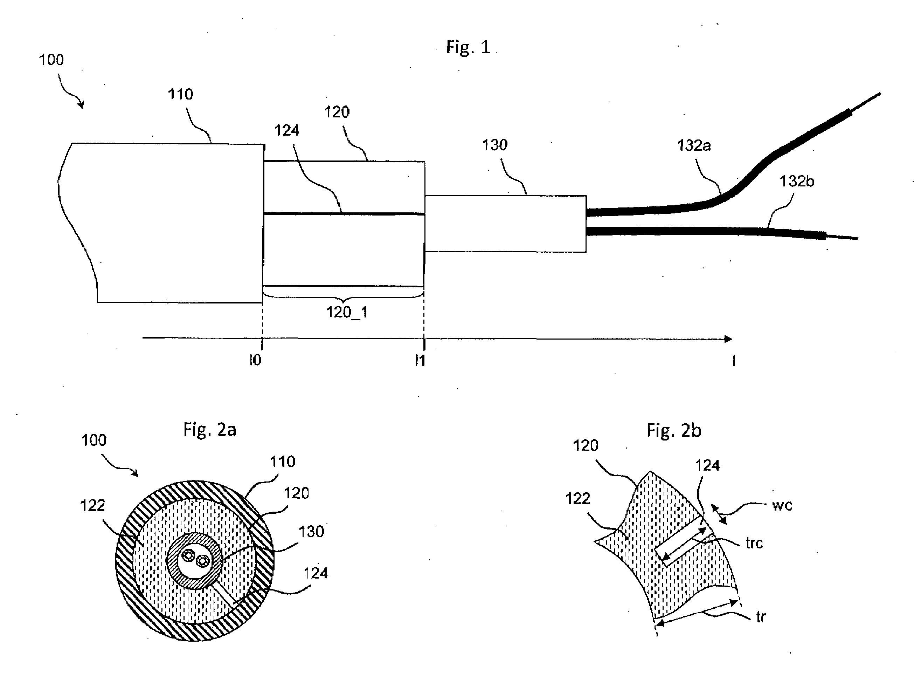

Figure 1 schematically depicts a side view of a cable 100 according to a first embodiment. The cable 100 comprises a radially outer section 110, which basically coaxially surrounds a radially inner section 130, both of which may comprise one or more electrical and/or optical conductors.

Presently, the radially inner section 130 of the cable 100 comprises an optical fiber cable (not shown) that has two optical fibers 132a, 132b.

A mechanical separation of the radially inner section 130 from the radially outer section 110 is effected by a per se known intermediate layer 120, which is arranged between the sections 110, 130 so that said intermediate layer 120 surrounds basically coaxially the radially inner section 130, and so that said intermediate layer 120 is basically coaxially surrounded by said radially outer section 110. According to an advantageous embodiment, the intermediate layer 120 comprises a filling material which at least partly fills the space between the radially outer section 110 and the radially inner section 130, wherein said filling material is preferably foam. Foam-type filling material may be provided to the cable 100 or the inner section 130 very efficiently by well-known manufacturing processes.

To facilitate stripping of the cable 100, especially without damaging the radially inner section 130 that comprises a delicate optical fiber assembly, said intermediate layer 120 comprises at least one structural weakening 124 along at least one longitudinal section 120_1 of said intermediate layer 120.

For stripping the radially inner section 130 of the cable 100, it is sufficient to identify the structural weakening 124 provided in said intermediate layer, e.g. after having stripped the radially outer section 130, which may comprise a jacket for electrical isolation or weather protection or the like, and to tear apart the different portions of the intermediate layer material in the range of the structural weakening 124. This process may well be performed manually by a technician, which is very efficient since no extra tools are required. Moreover, the inventive structure of the cable 100 does not require cutting tools to be employed for stripping the cable 100, whereby the risk of unintentionally damaging especially the radially inner section 130 of the cable is significantly reduced.

Alternatively or additionally, a stripping tool (not shown) may also be employed to strip the cable 100. However, at least for stripping the radially inner section 130, the tool is not required to comprise sharp blades or the like thus again reducing the risk of damage to the cable while stripping.

Figure 1 also depicts a length coordinate 1 of the cable 100. As can be seen from Fig. 1, the first longitudinal sections 120_1 of the intermediate layer 120, which comprises the structural weakening 124, extends from a first length coordinate 1 = 10 to a second length coordinate 1 = l1.

According to an advantageous embodiment, said structural weakening 124 is a cut, which can efficiently be applied to the intermediate layer 120 basically independently of the intermediate layer's material. Especially when manufacturing virtually endless cables 100, conventional cutting tools comprising one or more blades may efficiently be used to apply the structural weakening(s) 124 to the intermediate layer 120. Laser-cutting is also possible for effecting the structural weakening(s) 124 according to the embodiments.

Instead of cutting, the structural weakening(s) 124 may also be effected by varying processing parameters such as material thickness during a process of providing the intermediate layer 120. Combinations of the aforementioned measures are also possible.

Figure 2a schematically depicts a cross-sectional view of the cable 100 of Figure 1. As can be seen from Fig. 2, with the present embodiment, the structural weakening 124 is implemented in the form of a cut into the foam material 122 of the intermediate layer 120. Although being a preferred embodiment, the cut 124 is not required to be precisely radially aligned with respect to the longitudinal axis of the cable 100, as depicted by Fig. 2a.

If the cut 124 extends over the whole length of the cable 100 and its intermediate layer 120, a particularly simple manufacturing process is enabled in that the optical cable components 132a, 132b forming part of the radially inner section 130 (Fig. 1) may be moved into the radially inner area of the intermediate layer 120 after providing the cut 124 therein. Thus, basically no axial relative movement of the components 120, 130 is necessary for assembly of the cable 100, which reduces the risk of damaging the delicate optical components 132a, 132b.

Figure 2b schematically depicts an enlarged cross-sectional view of an intermediate layer 120 of a cable according to a further embodiment. As can be seen from Fig. 2b, the cut 124 does not fully extend in a radial direction through the radial thickness tr of said intermediate layer 120.

Rather, said cut 124 comprises a radial thickness trc of about 60 percent of the radial thickness tr of the intermediate layer 120. Generally, according to some embodiments, a structural weakening, especially cut 124, may comprise a radial thickness trc in a range between about 20 percent and about 100 percent of the radial thickness tr of said intermediate layer 120, preferably in a range between about 60 percent and about 95 percent of said radial thickness tr of said intermediate layer 120.

I.e., the weakenings 124 are not necessarily designed such that free access (i.e., without removing some intermediate layer material 122 such as e.g., foam) through the weakenings 124 to the radially inner section 130 (Fig. 2a) is possible. Rather, comparatively thin-walled (or even thicker) intermediate layer sections may remain radially outside the radially inner section 130 in the area of the weakenings 124 which increases protection of the radially inner section 130 prior to stripping and which further enables to prevent relative movements of components of the radially inner section 130 with respect to the intermediate layer 120 by means of increased adhesion and friction forces.

A thickness wc of the structural weakening may also be modified to control the stripping force required to remove the intermediate layer 120 from the radially inner section.

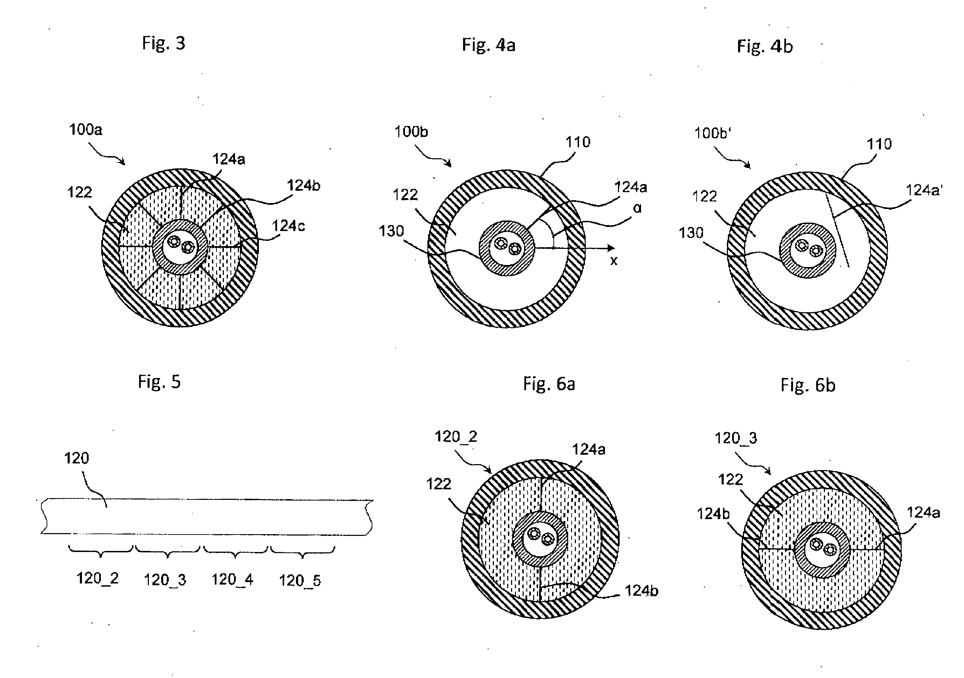

According to a further advantageous embodiment, a plurality of structural weakenings is provided within said at least one longitudinal section 120_1 (Fig. 1), whereby stripping can be performed more easily as compared to a lower number of weakenings. In this context, Figure 3 schematically depicts a cross-sectional view of a cable 100a according to a further embodiment. The foam material 122 of the intermediate layer 120 is presently divided into eight different sections by eight cuts 124a, 124b, 124c, .. which are preferably symmetrically aligned around the longitudinal axis of the cable 100. This way it is ensured that when stripping the cable 100a, a technician can easily identify at least one cut 124a and use it for removing the intermediate layer 120, independent of which side of the cable 100a is facing the technician.

Figure 4a schematically depicts a cross-sectional view of a cable 100b. according to a further embodiment. An angular position of the basically radially aligned cut 124 is defined by the angle α, presently with respect to a radial reference coordinate x of the cable 100b. Generally, one or more cuts 124 or structural weakenings of other types may be arranged not only at different length coordinates 1 (Fig. 1) of the cable or its intermediate layer 120, respectively, but also at different angular positions.

Figure 4b schematically depicts a cross-sectional view of a cable 100b' according to a further embodiment. In contrast to the aforementioned embodiments, the variant of Fig. 4b comprises a cut 124a' that is not strictly radially aligned with respect to a center axis or longitudinal axis of the cable 100b', but rather tangentially. More specifically, the tangential direction of the cut 124a' is preferably chosen depending on the outer diameter of the optical cable components 130 such that even if the cut 124 extends as far into a radial inner direction of the cable 100b' as depicted by Fig. 4b, cutting the components 130 will be avoided.

According to a further advantageous embodiment, a number of structural weakenings per unit length and/or an angular position of structural weakenings and/or a radial thickness of structural weakenings and/or a width of structural weakenings varies over different longitudinal sections of said intermediate layer. I.e., different longitudinal sections, which may be, but need not necessarily be, neighboring sections, of the cable or its intermediate layer, respectively, may each comprise one or more structural weakenings of different types.

Such longitudinal sections may e.g. comprise a length of some centimeters up to some meters or more.

Figure 5 schematically depicts a side view of an intermediate layer 120 of a cable according to a further embodiment, wherein four neighboring longitudinal sections 120_2, 120_3, 120_4, 120_5 are depicted.

For example, the first longitudinal section 120_2 may comprise one or more weakenings 124a, 124b according to the embodiments, cf. e.g. the cross-section of Fig. 6a, wherein the two cuts 124a, 124_b are provided with an angular distance of 180° between each other.

A second longitudinal section 120_3, which follows the first longitudinal section 120_2 along a length coordinate 1 (Fig. 1) of the cable, may e.g. comprise one or more weakenings 124a, 124b according to the cross-section of Fig. 6b. Since the cross-sectional views of Fig. 6a and 6b have the same angular orientation with respect to the cable, the cuts 124a, 124b of the section 120_3 are displaced by 90° each with respect to the cuts 124a, 124b of the section 120_2. Alternating sections having cross-sections of the types depicted by Fig. 6a, 6b yield a mechanically stable configuration while facilitating stripping.

A further length section 120_4 of the intermediate layer 120 (Fig. 5) may not comprise any weakenings at all and as such comprise a structure similar to a conventional cable. Periodically proving a length section of this type increases an overall stability of the cable.

Yet a further length section 120_5 of the intermediate layer 120 (Fig. 5) may comprise cuts as present within the preceding sections or different cut configurations, if any.

As already mentioned above, varying an angular position α (Fig. 4a) of weakenings 124 such as cuts between neighboring longitudinal sections 120_3, 120_4 (Fig. 5) is particularly advantageous since it maintains an optimal strippability over the complete cable length while at the same time avoiding a single cut extending all along the cable length, which - while facilitating the manufacturing process - affects stability of the cable and protection of the radially inner sections 130.

According to a further embodiment, the aforementioned properties related to the structural weakenings may change from length section 120_2 to length section 120_3, wherein the weakenings' properties basically remain constant within a specific length section.

Alternatively or additionally, the aforementioned properties related to the structural weakenings 124 may change basically continuously along the length coordinate I of the cable 100 (Fig. 1), whereby smooth transitions between cable sections 120_2, 120_3, .. with different stripping properties can be attained.

According to a further advantageous embodiment, said intermediate layer 120 comprises at least two substantially radial cuts arranged substantially symmetrically around the radially inner section of said cable. More than two cuts are also possible, e.g. four, six, eight cuts. The maximum number of cuts is basically determined depending on the required stability of the intermediate layer 120 and a desired friction force between the intermediate layer 120 and a radially inner section 130 of the cable. Generally, symmetric arrangement of the structural weakenings is preferred, but the invention is not limited thereto. Asymmetric or stochastic distribution of structural weakenings, e.g. cuts, is also possible.

According to a further advantageous embodiment, said radially outer section 110 and/or said radially inner section 130 comprises at least one electrical or optical conductor, wherein said at least one electrical conductor is preferably corrugated. The combination of electrical and optical conductors yield so-called hybrid electro-optical cables which are ideally suited for communications applications such as connecting remote radio heads for a base station of a cellular communications network to a remotely arrange baseband signal processing unit of the base station, wherein high data rate transmission can be effected via one or more optical fibers of the optical cable portion, and wherein other transmissions and an electrical energy supply, surge protection and the like are effected by the electrical cable portion. Advantageously, at least some electrical conductors of such an arrangement are arranged coaxially to each other. Corrugation of cylindrical/coaxial conductors increases their mechanical flexibility.

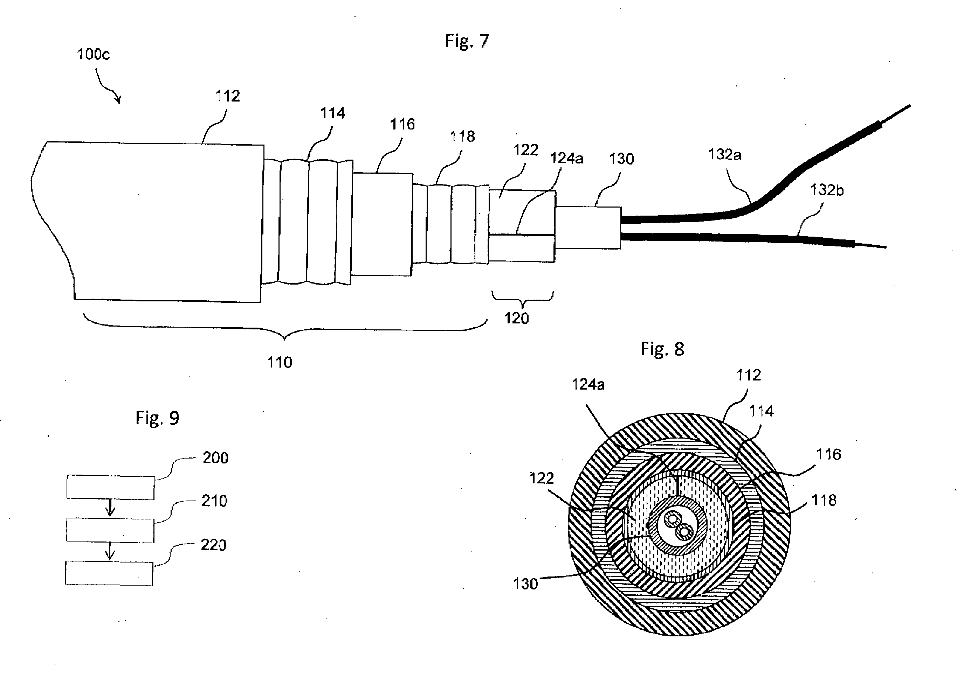

According to a further advantageous embodiment 100c, which is depicted in a side view by Fig. 7, said radially outer section 110 comprises a first electrical conductor 118, which is radially surrounded by an electrically insulating layer 116, wherein said electrically insulating layer 116 is radially surrounded by a second electrical conductor 114, and wherein said second electrical conductor 114 is radially surrounded by a protection layer 112. Preferably, the electrical conductors 114, 118 are corrugated.

According to a further advantageous embodiment, said radially inner section 130 comprises at least one optical fiber cable or single optical fibers 132a, 132b (Fig. 7) or a combination thereof.

Fig. 8 schematically depicts a cross-sectional view of the cable of Figure 7.

Further embodiments of the invention may also comprise optical fibers or optical fiber cables in the radially outer section 110 of the cable 100 and electrical cables in the radially inner section 130 of the cable 100.

Anyway, the structural weakenings 124 according to the embodiments facilitate stripping of the cable 100 and help to protect any conductor comprised therein from damage due to excessive stripping forces.

A further solution to the object of the present invention is given by a method of manufacturing a cable 100. Figure 9 depicts a simplified flow chart of an embodiment of the method. In a first step 200, said radially inner section is provided, i.e. by providing a conventional optical fiber cable or the like.

After that, in step 210 (Fig. 9), said intermediate layer 120 (Fig. 1) is provided on said radially inner section 130, and in step 220, said radially outer section 110 is provided on said intermediate layer 120. During the process according to the embodiments, at least one structural weakening 124 (Fig. 1) along at least one longitudinal section 120_1 of said intermediate layer 120 is provided.

If using foam material 122 for the intermediate layer 120, it is preferred to apply the cuts 124 after a cooling down process of the foam.

According to a preferred embodiment, said step of providing said at least one structural weakening is performed after said step of providing 210 said intermediate layer 120 on said radially inner section 130. This allows efficient manufacturing of the inner sections 130 of the cable 100 together with the intermediate layer 120. Since the step of providing said at least one structural weakening is performed during manufacturing of the cable 100 in a controlled processing environment - in contrast to a manual stripping process in the field-, the risk of damaging components of the cable 100 during application of the weakenings 124 (which may employ cutting, laser cutting, and the like) is very low.

However, according to a further advantageous embodiment, this risk may even be further reduced by said step of providing said at least one structural weakening being performed prior to said step of providing 210 said intermediate layer 120 on said radially inner section 130. This has the effect that no further manipulation of the intermediate layer 120 in the sense of providing cuts 124 or other structural weakenings is required once the ("pre-weakened") intermediate layer 120 has been applied to the radially inner section 130.

The step of cutting may e.g. be performed with blade tools or by means of laser cutting apparatus.

The cable 100 according to the embodiments may easily be stripped by removing the outer layers 110 and by gently bending the intermediate layer 120 together with the radially inner sections 130 surrounded thereby. As a result of bending, the foam material 122 of the layer 120 will break up in the regions of the cuts 124 whereby the radially inner section 130 is stripped without requiring excessive radial and/or axial forces. Advantageously, no special tools are required for removing the radially inner section 130 from within the intermediate layer 120, especially no cutting tools which could damage the components 132a, 132b of the radially inner section 130. Thereby, the invention provides an improved stripping and installation method for cables, especially for complex-structured hybrid cables 100c (Fig. 7).

The improved stripping process enabled by the embodiments is particularly useful when stripping hybrid cables 100c or cables with optical conductors 132a, 132b, since these types of cables must regularly be stripped up to 2,5 meters for proper splicing.

The invention offers the further advantages of reduced installation time of the cable 100 due to improved stripping behavior, reduced number of working steps, especially for removing the intermediate layer 120, no requirement of special tools, reduced overall costs, easy implementation of the principle of the invention, e.g. during a manufacturing process of the cable.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Cable (100) comprising a radially outer section (110), a radially inner section (130), and an intermediate layer (120) arranged between said radially outer section (110) and said radially inner section (130), wherein said intermediate layer (120) comprises at least one structural weakening (124) along at least one longitudinal section (122_1) of said intermediate layer (120).

2. Cable (100) according to claim 1, wherein said structural weakening (124) is a cut.

3. Cable (100) according to one of the preceding claims, wherein said intermediate layer (120) comprises filling material (122) which at least partly fills a space between the radially outer section (110) and the radially inner section (130), wherein said filling material (122) is preferably foam (122).

4. Cable (100) according to one of the preceding claims, wherein said at least one structural weakening (124) comprises a radial thickness (trc) in a range between about 20 percent and about 100 percent of a radial thickness (tr) of said intermediate layer (120), preferably in a range between about 60 percent and about 95 percent of said radial thickness (tr) of said intermediate layer (120) .

5. Cable (100) according to one of the preceding claims, wherein a plurality of structural weakenings (124a, 124b, 124c) is provided within said at least one longitudinal section (122_1).

6. Cable (100) according to one of the preceding claims, wherein
a. a number of structural weakenings (124a, 124b, 124c) per unit length and/or
b. an angular position (α) of structural weakenings (124a, 124b, 124c) and/or
c. a radial thickness (trc) of structural weakenings (124a, 124b, 124c) and/or
d. a width (wc) of structural weakenings (124a, 124b, 124c)
varies over different longitudinal sections (122_1, 122_2) of said intermediate layer (120) or a length coordinate (I) of said cable (100).

7. Cable (100) according to one of the preceding claims, wherein said intermediate layer (120) comprises at least two substantially radial cuts (124a, 124b) arranged substantially symmetrically around the radially inner section (130) of said cable (100).

8. Cable (100) according to one of the preceding claims, wherein said radially outer section (110) and/or said radially inner section (130) comprises at least one electrical or optical conductor, wherein said at least one electrical conductor is preferably corrugated.

9. Cable (100c) according to one of the preceding claims, wherein said radially outer section (110) comprises a first electrical conductor (118), which is radially surrounded by an electrically insulating layer (116), wherein said electrically insulating layer (116) is radially surrounded by a second electrical conductor (114), and wherein said second electrical conductor (114) is radially surrounded by a protection layer (112).

10. Cable (100c) according to one of the preceding claims, wherein said radially inner section (130) comprises at least one optical fiber cable or single optical fibers (132a, 132b).

11. Method of manufacturing a cable (100) which comprises a radially outer section (110), a radially inner section (130), and an intermediate layer (120) arranged between said radially outer section (110) and said radially inner section (130), wherein said method comprises the following steps: providing (200) said radially inner section (130), providing (210) said intermediate layer (120) on said radially inner section (130), and providing said radially outer section (130) on said intermediate layer (120), wherein at least one structural weakening (124) along at least one longitudinal section (122_1) of said intermediate layer (120) is provided.

12. Method according to claim 11, wherein said step of providing said at least one structural weakening (124) is performed after said step of providing (210) said intermediate layer (120) on said radially inner section (130).

13. Method according to claim 11, wherein said step of providing said at least one structural weakening (124) is performed prior to said step of providing (210) said intermediate layer (120) on said radially inner section (130).

14. Method according to claim 11, wherein said step of providing said at least one structural weakening (124) is performed by cutting said intermediate layer (120) with a bladed tool and/or by laser cutting.
